# EUROPÄISCHE PATENTSCHRIFT

(11) **EP 4 287 988 B1**
(45) Veröffentlichungstag und Bekanntmachung des Hinweises auf die Patenterteilung: **27.11.2024**
(21) Anmeldenummer: 21839542.4
(22) Anmeldetag: 17.12.2021
(51) Int. Cl.: A61C 9/00, A61C 19/06

(54) **DENTALE PRÄPARATIONSMANSCHETTE**
DENTAL PREPARATION CUFF
MANCHON DE PRÉPARATION DENTAIRE

(30) Priorität: 04.02.2021 DE 102021201056
(43) Veröffentlichungstag der Anmeldung: 13.12.2023
(73) Patentinhaber: Raumedic AG, 95213 Münchberg (DE); Lemelson, Susanne, 65510 Idstein (DE)
(72) Erfinder: WAGNER, Karsten, 65510 Hünstetten (DE); FESTEL, Tobias, 95234 Sparneck (DE); GLÄSEL, Björn, 95158 Kirchenlamitz (DE); ÖZTÜRK, Adnan, 27753 Delmenhorst (DE); LEMELSON, Susanne, 65510 Idstein (DE)
(74) Vertreter: Schmitt-Nilson Schraud Waibel Wohlfrom Patentanwälte Partnerschaft mbB
(86) Internationale Anmeldenummer: PCT/EP2021/086526
(87) Internationale Veröffentlichungsnummer: WO 2022/167137

(56) Entgegenhaltungen:
- WO-A1-2019/058243
- WO-A1-2019/058243
- CH-A5- 695 234
- CH-A5- 695 234
- DE-U- 7 434 552
- DE-U- 7 434 552
- US-A1- 2006 188 842
- US-A1- 2006 188 842
- US-A1- 2007 128 581
- US-A1- 2007 128 581
- US-A1- 2011 065 061
- US-A1- 2011 065 061
- US-A1- 2013 183 630
- US-A1- 2013 183 630

## Beschreibung

Die Erfindung betrifft eine dentale Präparationsmanschette zum Freilegen eines Übergangsbereichs (Präparationsrandes) zwischen einem Zahnhals eines präparierten Zahns und umliegendem Zahnfleisch.

Eine derartige Präparationsmanschette ist vom Markt her bekannt. Die DE 74 34 552 U offenbart ein ringförmiges Hilfsmittel für eine Abformung von Zahnkronenstümpfen. Die US 2007/0160952 A1 offenbart ein Verfahren zur Zahnfleischverdrängung. Die US 2004/0265777 A1 und die US 8,118,595 B2 offenbaren Präparationsmittel zur Verdrängung von Zahnfleisch zur Vorbereitung eines Abdrucks.

WO 2019/058243 A1 beschreibt ein Werkzeug zum Formen einer Zahnrestauration, wobei das Werkzeug umfasst: einen vorgeformten Formkörper, der so konfiguriert ist, dass er eine patientenspezifische, maßgeschneiderte Passform für mindestens einen zu restaurierenden Zahn eines Patienten bereitstellt, wobei der Formkörper so konfiguriert ist, dass er sich mit einem Teil einer Oberfläche des mindestens einen Zahns ausrichtet, der Formkörper so konfiguriert ist, dass er sich mit dem mindestens einen Zahn verbindet, um einen Formhohlraum zu definieren, der mindestens einen Teil der gewünschten Zahnstruktur des mindestens einen zu restaurierenden Zahns des Patienten umfasst, wobei der Teil der gewünschten Zahnstruktur des mindestens einen zu restaurierenden Zahns einen Übergang von einer supragingivalen Oberfläche des mindestens einen Zahns zu einer subgingivalen Oberfläche des mindestens einen Zahns definiert.

US 2013/183630 A1 beschreibt ein Polymer-Klebstoff auf thermoplastischer Basis zur Verwendung in der Zahnmedizin, umfassend: ein thermoplastisches Polymer, und ein zusätzliches Polymer oder Additiv, das mindestens eine Einheit, ein Monomer oder ein Präpolymer enthält, das in der Lage ist, mindestens eine Eigenschaft des Polymerklebstoffs auf thermoplastischer Basis zu verändern, wenn es einer Aktivierungsenergie ausgesetzt wird.

CH 695 234 A5 beschreibt eine Verdrängungskappe zur Verdrängung des Zahnfleisches um den Kopfbereich von enossalen Zahnimplantaten, bestehend aus einem länglichen röhrchenartigen Körper mit einer innen am Röhrchen angebrachten Dichtlippe auf einer Seite, wobei die Dichtlippe mit dem Kopfbereich von Zahnimplantaten so zusammenwirkt, dass bei korrekter Montage der Verdrängungskappe die weiteste Zirkumferenz des Implantats überragt und sich an dieser Zirkumferenz festklemmt, wobei die am Implantatkopf hochgewachsene Gingiva reversibel verdrängt wird.

Es ist eine Aufgabe der vorliegenden Erfindung, eine Präparationsmanschette der eingangs genannten Art derart weiterzubilden, dass ihre Patientenverträglichkeit verbessert ist.

Diese Aufgabe ist erfindungsgemäß gelöst durch eine Präparationsmanschette mit den im Anspruch 1 angegebenen Merkmalen.

Erfindungsgemäß wurde erkannt, dass eine aus einem Material mit definierter Shorehärte gefertigte Präparationsmanschette insbesondere zahnfleischschonend, aber auch zahnschonend gestaltet sein kann. Der Übergangsbereich zwischen dem Zahnhals des zu präparierenden Zahns und dem umliegenden Zahnfleisch, der auch als Präparationsrand bezeichnet ist, kann schonend freigelegt werden. Die Shorehärte des Materials liegt im Bereich zwischen 70A und 95A und kann im Bereich zwischen 75A und 90A, besonders im Bereich von 80A liegen. Bei dem Material kann es sich um ein thermoplastisches Elastomer (TPE) handeln. Bei dem Material kann es sich um ein Polyurethan (PUR), um ein Polyethylen (PE), um ein Polypropylen (PP), um ein Polyetherblockamid (PEBAX, PEBA) oder um ein Silikon (SIK) handeln. Die Präparationsmanschette kann durch Spritzguss gefertigt werden.

Alternativ kann die Präparationsmanschette auch über ein Extrusionsverfahren hergestellt werden.

Die Präparationsmanschette kann auch zum Freilegen eines Übergangsbereichs zwischen dem Zahnhals eines zu präparierenden Zahns und umliegendem Zahnfleisch dienen. Bei einer durch Spritzguss hergestellten Präparationsmanschette ergibt sich insbesondere über eine dann bevorzugt vorhandene Materialflexibilität und bei Verwendung einer Manschetten- Grundgröße die Möglichkeit einer Anpassung der Manschette an eine jeweilige Zahnanatomie.

Der im Querschnitt keilförmig radial nach innen zulaufende Randbereich der Zahnöffnung dient zum Abheben bzw. Verschieben des den Präparationsrand umgebenden Zahnfleischs.

Die Präparationsmanschette kann als bodenlose Hülse oder als eine einen Boden aufweisende Manschette ausgeführt sein, bei der die Zahnöffnung als Sackloch gebildet ist.

Die Präparationsmanschette kann nach entsprechender Sterilisierung, mehrfach verwendet werden. Die Präparationsmanschette kann eine über- bzw. abstehende Sicherheitskomponente aufweisen, die als Verlier- bzw. Verschluckschutz dienen kann. Eine derartige Sicherheitskomponente kann als Sicherheitsschlaufe ausgeführt sein. Die Sicherheitskomponente kann an die Präparationsmanschette direkt angeformt sein. Die Sicherheitskomponente ist an der Präparationsmanschette bevorzugt beabstandet zum Randbereich angebracht. Die Sicherheitskomponente kann aus dem gleichen Material sein wie die Präparationsmanschette, kann aber auch aus einem abweichenden Material, insbesondere mit abweichender Shorehärte, gefertigt sein. Die Präparationsmanschette kann gemeinsam mit der Sicherheitskomponente in einem solchen Fall in einem 2K-Verfahren hergestellt sein.

Mindestens eine Ausnehmung in einem äußeren Keilwandabschnitt der Umfangs-Wand der Präparationsmanschette nach Anspruch 1 kann zur Benetzung und/oder zur Beladung der Präparationsmanschette insbesondere mit einem Medikament, zum Beispiel in Form einer beispielsweise adstringierenden Flüssigkeit, eines Gels oder einer Salbe, genutzt werden, was eine Patientenverträglichkeit der Präparationsmanschette weiter verbessern hilft. Die Präparationsmanschette kann mehr als 5, mehr als 10 und beispielsweise 16 derartige Ausnehmungen aufweisen. Auch eine sehr viel größere Anzahl derartiger Ausnehmungen ist möglich, beispielsweise mehrere hundert derartiger Ausnehmungen. Die Anzahl derartiger Ausnehmungen kann beispielsweise bei 500 liegen. Entsprechende Ausnehmungen im äußeren Keilwandabschnitt der Umfangs-Wand können auch durch eine Strukturierung des Keilwandabschnitts gebildet werden. Eine solche Strukturierung kann regelmäßig, beispielsweise nach Art eines Rasters, oder auch unregelmäßig erfolgen. Die Ausnehmung kann, um eine hierdurch hervorgerufene Irritation des Patienten zu vermeiden, mit einem atraumatischen Radius gestaltet sein. Alternativ kann auf einen derartigen atraumatischen Radius auch verzichtet werden.

Ein umlaufender innerer Steg nach Anspruch 1 und/oder ein umlaufender äußerer Steg nach Anspruch 1 sorgen für eine randseitige Begrenzung der Ausnehmung und erleichtern somit eine Beladung der Ausnehmung. Zudem verbleibt im Bereich dieser Stege jeweils ein Bereich des äußeren Keilwandabschnitts erhalten, sodass die Funktion des äußeren Keilwandabschnitts beim Freilegen des Übergangsbereichs nicht beeinträchtigt ist.

Grundsätzlich kann die Umfangs-Wand der Präparationsmanschette einen kreisförmigen Querschnitt aufweisen. Ein von einer Kreisform abweichender Querschnitt der Umfangs-Wand nach Anspruch 2 oder ein elliptischer Querschnitt der Umfangs-Wand nach Anspruch 3 kann gut an eine Zahnanatomie angepasst sein. Ein Hauptachsenverhältnis des elliptischen Querschnitts kann im Bereich zwischen 1,3 und 1,4 und kann beispielsweise bei 1,35 liegen. Alternativ kann die Umfangs-Wand auch einen ovalen Querschnitt aufweisen.

Eine Umfangs-Wand mit wellenförmiger Axialkontur nach Anspruch 4 ist gut an eine Zahnanatomie angepasst.

Dies gilt besonders für einen axialen Abstand der axialen Erstreckungsbereiche der wellenförmigen Axialkontur nach Anspruch 5.

Eine Bodendicke eines Zahnöffnungs-Bodens nach Anspruch 6 führt zu einer vorteilhaften Grundstabilität der Präparationsmanschette, ohne dass eine Flexibilität bei der Anpassung an den jeweiligen Zahn verloren geht. Eine derartige Bodendicke kann insbesondere für eine Formstabilität der Präparationsmanschette sorgen, sodass sich die Präparationsmanschette nicht unerwünscht, beispielsweise aufgrund eines Beißdrucks, verformt.

Eine Dicke des Bodens kann im Bereich zwischen 0,25 und 0,4 der axialen Gesamterstreckung der Präparationsmanschette betragen. Auch andere Verhältnisse aus Dicke des Bodens und axialer Gesamterstreckung der Präparationsmanschette im Bereich zwischen 0,15 und 0,25, im Bereich zwischen 0,2 und 0,3, im Bereich zwischen 0,25 und 0,35 und im Bereich zwischen 0,3 und 0,4 sind möglich.

Eine Präparationsmanschette kann sich insbesondere individuell an eine Zahnanatomie anpassen lassen. Die Präparationsmanschette kann mithilfe eines CAD(Computer Aided Design)-Vorbereitungsschritts hergestellt werden. Bei der Herstellung der Präparationsmanschette können Methoden des Computer-Aided Manufacturing (CAM) zum Einsatz kommen. Hierbei können die Geometriedaten für die Präparationsmanschette aus dem CAD eingelesen werden. Je nach Anwendungsfall kann die Geometrie der Präparationsmanschette, die sich aus den CAD-Daten ergibt, noch verändert werden. Alternativ zu einem 3D-Druckverfahren kann die Präparationsmanschette auch durch ein Spritzgussverfahren sowie durch ein Extrusionsverfahren beziehungsweise ein Formpressverfahren hergestellt werden.

Ein Set nach Anspruch 8 erleichtert die Anpassung einer jeweiligen Präparationsmanschette an einen individuellen zu behandelnden Zahn. Es kann jeweils diejenige Präparationsmanschette mit einer Zahnöffnung mit leichtem Untermaß im Vergleich zum Außenumfang des zu behandelnden Zahns ausgewählt werden, was für eine gute Anpassung der Präparationsmanschette an den Zahnhals und eine entsprechend gute Freilegung des Übergangsbereichs sorgt. Das Set kann zwischen zwei und mehr als 20, beispielsweise 40 verschiedene Präparationsmanschetten aufweisen. Auch eine noch größere Anzahl unterschiedlicher Präparationsmanschetien als Bestandteile eines Sets ist möglich. Alternativ können die Präparationsmanschetten auch einzeln hergestellt und genutzt werden.

Ein Ausführungsbeispiel der Erfindung wird nachfolgend anhand der Zeichnung näher erläutert. In dieser zeigen:
- Fig. 1: eine perspektivische Ansicht einer dentalen Präparationsmanschette zum Freilegen eines Übergangsbereichs (Präparationsrandes) zwischen einem Zahnhals eines präparierten Zahns und umliegendem Zahnfleisch;
- Fig. 2: eine Aufsicht auf die Präparationsmanschette nach Fig. 1;
- Fig. 3: einen Schnitt gemäß Linie III-III in Fig. 2;
- Fig. 4: ein Schnitt gemäß Linie IV-IV in Fig. 2;
- Fig. 5: eine Ausschnittsvergrößerung des Details V in Fig. 2; und
- Fig. 6: die Präparationsmanschette in Position aufgesteckt auf einen präparierten Zahn im Mund eines Patienten.

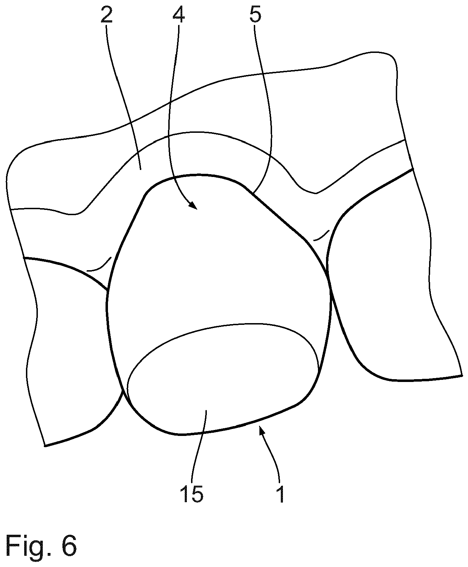

Eine dentale Präparationsmanschette 1 dient zum Freilegen eines Übergangsbereichs (Präparationsrandes) zwischen einem Zahnhals eines präparierten Zahns und umliegendem Zahnfleisch 2 eines Patienten (vgl. Fig. 6).

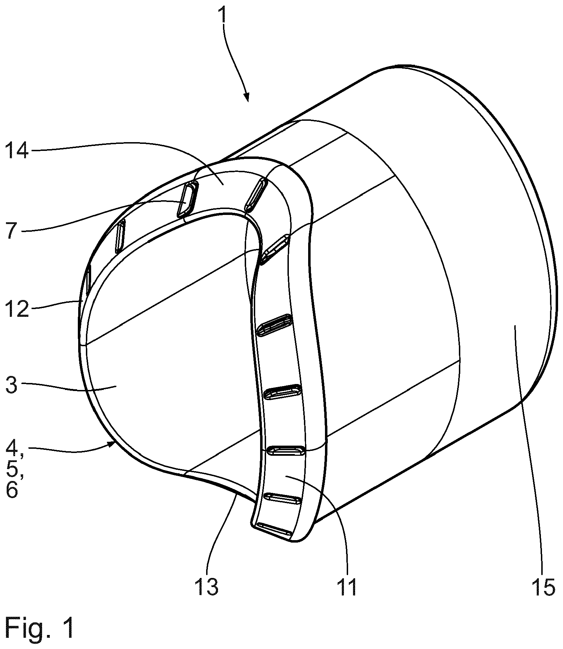

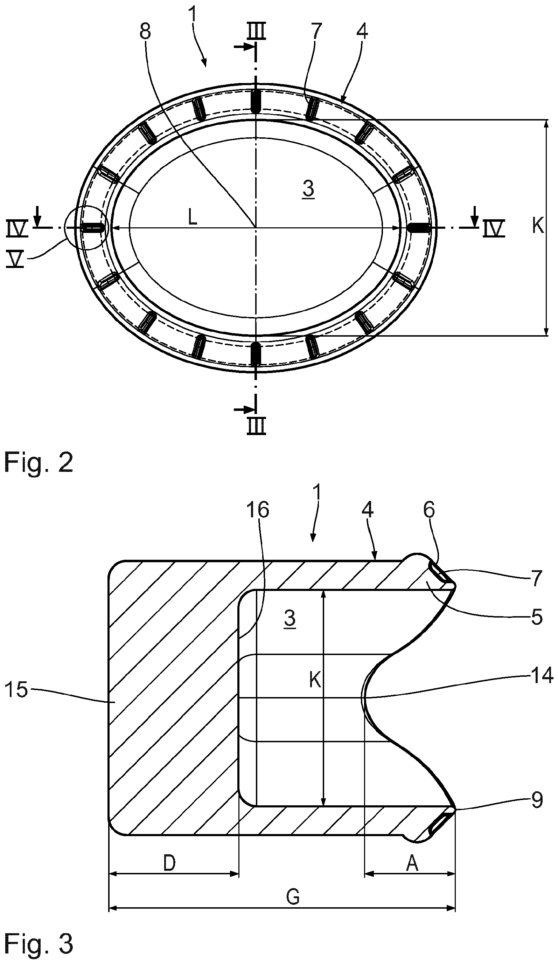

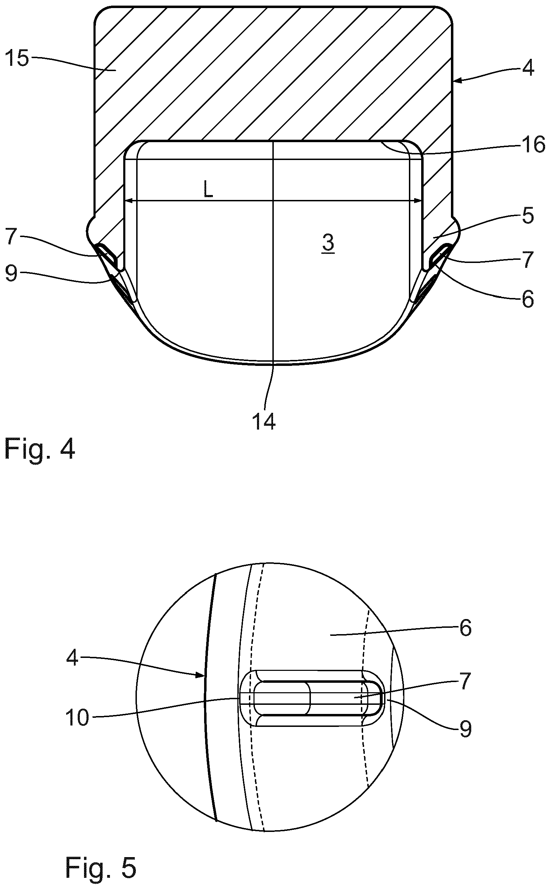

Details der Präparationsmanschette 1 ergeben sich aus den Figuren 1 bis 5. Die Präparationsmanschette 1 hat eine Zahnöffnung 3 zum Aufstecken auf den Zahn. Die Zahnöffnung 3 ist umlaufend begrenzt durch eine Umfangs-Wand 4. Letztere hat (vgl. die Figuren 3 und 4) einen im Querschnitt keilförmig radial nach innen, also zur Zahnöffnung 3 hin, zulaufenden Randbereich 5. Im Randbereich 5 ist eine äu-ßere Wandstärke der Umfangs-Wand 4 nach Art einer Wulst erhöht.

Die Präparationsmanschette 1 ist insgesamt aus einem Material mit einer Shorehärte im Bereich zwischen 70 A und 95 A gefertigt. Die Shorehärte kann bei 75A, 80A oder bei 85 A liegen. Bei dem Material kann es sich um ein thermoplastisches Elastomer (TPE) handeln. Bei dem Material kann es sich um ein Polyurethan (PUR), um ein Polyethylen (PE), um ein Polypropylen (PP), um ein Polyetherblockamid (PEBAX, PEBA), um ein Silikon (SIK) handeln.

Ein äußerer Keilwandabschnitt 6 des Randbereichs 5 der Umfangs-Wand 4 hat eine Mehrzahl von Ausnehmungen 7, die gegenüber dem jeweils umgebenden Keilwandabschnitt 6 zurückspringt. Bei der Ausführung nach den Figuren 1 bis 5 hat die Präparationsmanschette 1 sechzehn solcher Ausnehmungen 7. Auch eine andere Anzahl derartiger Ausnehmungen im Bereich zwischen 1 und 100 ist möglich. Die Ausnehmungen 7 verlaufen in etwa radial zu einer zentral in der Zahnöffnung 3 verlaufenden Längsachse 8 der Präparationsmanschette 1. Zwischen der jeweiligen Ausnehmung 7 und einem inneren Umfangs-Randbereich der Umfangs-Wand 4, der einen Umfang der Zahnöffnung 3 begrenzt, verbleibt ein umlaufender innerer Steg 9. Zwischen der jeweiligen Ausnehmung 7 und einem äußeren Umfangs-Randbereich der Umfangs-Wand 4, der einen Außenumfang der Präparationsmanschette 1 im Bereich der Zahnöffnung 3 begrenzt, verbleibt ein umlaufender äußerer Steg 10. Die jeweilige Ausnehmung 7 ist also vollumfänglich begrenzt von nicht ausgenommenen Teilen des äußeren Keilwandabschnitts 6.

Die Umfangs-Wand 4 und damit die Zahnöffnung 3 hat einen von einer Kreisform abweichenden Querschnitt. In der Ausführung nach den Figuren 1 bis 5 hat die Umfangs-Wand 4 einen Querschnitt um die Zahnöffnung 3 herum, der elliptisch ausgeführt ist mit einem Hauptachsenverhältnis zwischen einer langen Hauptachse L und einer kurzen Hauptachse K von etwa 1,35. Je nach Ausführung der Präparationsmanschette 1 kann dieses Hauptachsenverhältnis L/K auch einen anderen Wert im Bereich von beispielsweise zwischen 1,1 und 1,5, besonders zwischen 1,3 und 1,4, aufweisen. Je nach Ausführung der Präparationsmanschette 1 kann der Querschnitt der Zahnöffnung 3, der durch die Umfangs-Wand 4 begrenzt ist, auch beispielsweise oval ausgeführt sein.

Wie der perspektivischen Darstellung nach Fig. 1 sowie einer Zusammenschau der Schnittansichten nach den Figuren 3 und 4 entnommen werden kann, hat die Umfangs-Wand 4 eine wellenförmige Axialkontur mit zwei axialen Maximal-Erstreckungsbereichen 11, 12 und zwei axialen Minimal- Erstreckungsbereichen 13, 14. Ein axialer Abstand A zwischen den Maximal-Erstreckungsbereichen 11, 12 einerseits und den Minimal- Erstreckungsbereichen 13, 14 andererseits liegt etwa im Bereich der kleineren Hauptachsenerstreckung K/2 des elliptischen Querschnitts der Umfangs-Wand 4 bzw. der Zahnöffnung 3. Dieser axiale Abstand A kann je nach Ausführung der Präparationsmanschette 1 zwischen dem 0,8-fachen und dem 1,2-fachen der kleineren Hauptachsenerstreckung K/2 liegen. Die Zahnöffnung 3 ist als Sacköffnung ausgeführt. Ein Boden 15 der Zahnöffnung 3 hat eine Dicke D, die größer ist als ein Viertel einer Gesamterstreckung G der Präparationsmanschette 1 senkrecht zu einer Bodenfläche 16 des Bodens 15 der Zahnöffnung 3.

Die Präparationsmanschette 1 kann insgesamt mittels 3D-Druck hergestellt werden. Alternativ zu einem 3D-Druckverfahren kann die Präparationsmanschette auch durch ein Spritzgussverfahren sowie durch ein Extrusionsverfahren beziehungsweise ein Formpressverfahren hergestellt werden.

Die Präparationsmanschette 1 ist entweder ein Einzelstück oder ist Teil eines Sets aus mehreren Präparationsmanschetten nach Art der Präparationsmanschette 1 mit unterschiedlichen Weiten und/oder unterschiedlichen Tiefen der Zahnöffnungen 3, angepasst an die jeweilige Zahngröße bzw. Zahnanatomie des Patienten.

Die Präparationsmanschetten 1 des Sets können sich auch hinsichtlich des Maßes für den axialen Abstand A zwischen den Maximai- Erstreckungsbereichen und den Minimal-Erstreckungsbereichen der Umfangs-Wand 4 unterscheiden. Unterschiede können sich bei den verschiedenen Präparationsmanschetten 1 des Sets auch hinsichtlich der jeweiligen Umfangserstreckungen der Erstreckungsbereiche 11 bis 14 ergeben.

Bei der Präparation insbesondere eines Kronenabdrucks für einen zu behandelnden Zahn wird zunächst eine Präparationsmanschette 1 als Einzelstück hergestellt oder es wird aus dem Präparationsmanschetten-Set eine passende Präparationsmanschette 1 für den zu behandelnden Zahn ausgewählt. Hierbei wird eine Präparationsmanschette 1 gewählt, deren Zahnöffnung 3 im Vergleich zum Umfang des zu behandelnden Zahns ein Untermaß aufweist, sodass die Präparationsmanschette 1 satt auf dem Zahn aufgesteckt und aufgeschoben werden kann. Die wellenförmige Axialkontur der Umfangs-Wand 4 wird durch Drehen der Präparationsmanschette 1 um die Längsachse 8 nach Vorpositionierung auf dem zu behandelnden Zahn so ausgerichtet, dass die Minimal-Erstreckungsbereiche Umfangspositionen im Bereich benachbarter Zähne einnehmen.

Nun wird die Präparationsmanschette 1 vollständig auf den zu behandelnden Zahn aufgeschoben, wobei der keilförmig zulaufende Randbereich 5 zwischen den Zahnhals und das diesen umgebende Zahnfleisch eindringt und hierdurch das den zu behandelnden Zahn umgebende Zahnfleisch im Übergangsbereich zwischen dem Zahnhals des zu behandelnden Zahns und dem umliegenden Zahnfleisch verdrängt. Ein Freilegungsdruck kann über den Patienten durch Biss über den Gegenkiefer erzeugt werden. Nach erfolgter Verdrängung kann die Präparationsmanschette 1 abgenommen werden und der Übergangsbereich zwischen dem Zahnhals des zu behandelnden Zahns und dem umliegenden Zahnfleisch bleibt für einen bestimmten Zeitraum freiliegend. In dieser Situation kann dann ein Abdruck des zu behandelnden Zahns einschließlich des freigelegten Übergangsbereichs mit üblichem Abdruckmaterial hergestellt werden.

Vor dem Aufstecken der Präparationsmanschette 1 auf den zu behandelnden Zahn können die Ausnehmungen 7 noch mit einem Medikament beladen werden, welches eine Irritation beziehungsweise Blutung des verdrängten Zahnfleisches während des Einsatzes der Präparationsmanschette 1 verringert bzw. einer solchen Irritation beziehungsweise Blutung vorbeugt.

Bei Einsatz eines 3D-Druckverfahrens kann nach der Präparation des zu behandelnden Zahns eine optische oder analoge Vorabdrucknahme des vorpräparierten Zahns erfolgen. Mit Hilfe einer entsprechenden Software wird dann eine individuelle Präparationsmanschette 1 designt, die an die Anatomie des vorpräparierten Zahns angepasst ist. Diese individuell erstellte Präparationsmanschette kann dann im 3D-Druck hergestellt werden.

Bei Präparationsmanschetten, die insbesondere im Spritzguss- oder ExtrusionsVerfahren hergestellt werden, wird durch den Zahnarzt eine entsprechende Variante gewählt und aufgesteckt. Diese Präparationsmanschette 1 wird so ausgewählt, dass sie satt am Zahn sitzt und sich durch ihre Flexibilität dem Zahn anpasst.

Zu einem Set können zwei bis 20 hinsichtlich ihrer Dimensionen verschiedene Präparationsmanschetten nach Art der Präparationsmanschette 1 gehören. Alternativ ist eine Einzelfertigung beziehungsweise -nutzung der jeweiligen Präparationsmanschette 1 möglich.

## Patentansprüche

1. Dentale Präparationsmanschette (1) zum Freilegen eines Übergangsbereichs zwischen einem Zahnhals eines präparierten Zahns und umliegendem Zahnfleisch (2),
- mit einer Zahnöffnung (3) zum Aufstecken auf den Zahn, aufweisend eine Umfangs-Wand (4) mit im Querschnitt keilförmig radial nach innen zulaufenden Randbereich (5),
- gefertigt aus einem Material mit einer Shorehärte im Bereich zwischen 70A und 95A,
wobei die Präparationsmanschette **dadurch gekennzeichnet ist,**
**dass** ein äußerer Keilwandabschnitt (6) der Umfangs-Wand (4) mindestens eine Ausnehmung (7) aufweist, die gegenüber dem umgebenden Keilwandabschnitt (6) rückspringt, dass zwischen der mindestens einen Ausnehmung (7) und einem inneren Umfangs-Randbereich der Umfangs-Wand (4), der einen Umfang der Zahnöffnung (3) begrenzt, ein umlaufender innerer Steg (9) verbleibt, und dass zwischen der mindestens einen Ausnehmung (7) und einem äußeren Umfangs-Randbereich der Umfangs-Wand (4), der einen Außenumfang der Präparationsmanschette (1) im Bereich der Zahnöffnung (3) begrenzt, ein umlaufender äußerer Steg (10) verbleibt.

2. Präparationsmanschette nach Anspruch 1, wobei die Umfangs-Wand (4) einen von einer Kreisform abweichenden Querschnitt aufweist.

3. Präparationsmanschette nach Anspruch 2, wobei der Querschnitt der Umfangs-Wand (4) elliptisch mit einem Hauptachsenverhältnis (L/K) im Bereich zwischen 1,1 und 1,5 ausgeführt ist.

4. Präparationsmanschette nach einem der Ansprüche 1 bis 3, wobei die Umfangs-Wand (4) eine wellenförmige Axialkontur mit zwei axialen Maximal-Erstreckungsbereichen (11, 12) und zwei axialen Minimal-Erstreckungsbereichen (13, 14) aufweist.

5. Präparationsmanschette nach Anspruch 3 oder 4, wobei ein axialer Abstand (A) zwischen den Maximal-Erstreckungsbereichen (11, 12) einerseits und den Minimal-Erstreckungsbereichen (13, 14) andererseits im Bereich zwischen dem 0,8-fachen und dem 1,2-fachen einer kleineren Hauptachsenerstreckung (K/2) des elliptischen Querschnitts der Umfangs-Wand (4) ausgeführt ist.

6. Präparationsmanschette nach einem der Ansprüche 1 bis 5, wobei die Zahnöffnung (3) als Sacköffnung ausgeführt ist, wobei ein Boden (15) der Zahnöffnung (3) eine Dicke (D) hat, die größer als ein Viertel einer axialen Gesamterstreckung (G) der Präparationsmanschette (1) senkrecht zu einer Bodenfläche (16) des Bodens (15) ist.

7. Präparationsmanschette nach einem der Ansprüche 1 bis 6, wobei der Übergangsbereich ein Präparationsrand ist.

8. Set aus mehreren Präparationsmanschetten nach einem der Ansprüche 1 bis 7 mit unterschiedlichen Weiten und/oder unterschiedlichen Tiefen der Zahnöffnungen (3) und/oder mit unterschiedlichen axialen Abständen (A) zwischen den Maximal-Erstreckungsbereichen (11, 12) und den Minimal-Erstreckungsbereichen (13, 14).

## Claims

1. A dental preparation cuff (1) for exposing a transition area between a tooth neck of a prepared tooth and surrounding gums (2),
- comprising a tooth opening (3) for placement on the tooth, having a peripheral wall (4) with an edge portion (5) tapering in wedge-shaped manner radially inwards in cross-section,
- made of a material having a Shore hardness in the range between 70A and 95A,
wherein the preparation cuff is **characterized in**
**that** an outer wedge wall section (6) of the peripheral wall (4) has at least one recess (7) which is recessed relative to the surrounding wedge wall section (6),
**that** a circumferential inner web (9) remains between the at least one recess (7) and an inner peripheral edge portion of the peripheral wall (4), which delimits a circumference of the tooth opening (3), and
**that** a circumferential outer web (10) remains between the at least one recess (7) and an outer peripheral edge portion of the peripheral wall (4), which delimits an outer circumference of the preparation cuff (1) in the region of the tooth opening (3).

2. The preparation cuff according to claim 1,
wherein the peripheral wall (4) has a cross-section deviating from a circular shape.

3. The preparation cuff according to claim 2,
wherein the cross-section of the peripheral wall (4) is elliptical with a major axis ratio (L/K) in the range between 1.1 and 1.5.

4. The preparation cuff according to any of claims 1 to 3,
wherein the peripheral wall (4) has a wave-shaped axial contour with two axial maximum extension regions (11, 12) and two axial minimum extension regions (13, 14).

5. The preparation cuff according to claim 3 or 4,
wherein an axial distance (A) between the maximum extension regions (11, 12) on the one hand and the minimum extension regions (13, 14) on the other hand is in the range between 0.8 times and 1.2 times a smaller major axis extension (K/2) of the elliptical cross-section of the peripheral wall (4).

6. The preparation cuff according to any of claims 1 to 5,
wherein the tooth opening (3) is designed as a blind opening, wherein a bottom (15) of the tooth opening (3) has a thickness (D) which is greater than a quarter of a total axial extension (G) of the preparation cuff (1) perpendicular to a bottom surface (16) of the bottom (15).

7. The preparation cuff according to any of claims 1 to 6,
wherein the transition area is a preparation edge.

8. A set of a plurality of preparation cuffs according to any of claims 1 to 7 with different widths and/or different depths of the tooth openings (3) and/or with different axial distances (A) between the maximum extension regions (11, 12) and the minimum extension regions (13, 14).

## Revendications

1. Manchon de préparation dentaire (1) permettant d'exposer une zone de transition entre un collet d'une dent préparée et la gencive environnante (2),
- avec une ouverture de dent (3) pour l'emboîtement sur la dent, présentant une paroi périphérique (4) avec une zone de bord (5) de section transversale cunéiforme se terminant radialement vers l'intérieur,
- fabriqué à partir d'un matériau ayant une dureté Shore comprise entre 70A et 95A,
le manchon de préparation dentaire étant **caractérisé en ce que**
une section de paroi en coin extérieure (6) de la paroi périphérique (4) présente au moins un évidement (7) qui est en retrait par rapport à la section de paroi en coin environnante (6), **en ce qu'**il reste une nervure intérieure périphérique (9) entre l'évidement (7), un au moins, et une zone de bord périphérique intérieure de la paroi périphérique (4) qui délimite une périphérie de l'ouverture de dent (3), et **en ce que**, entre l'évidement (7), un au moins, et une zone de bord périphérique extérieure de la paroi périphérique (4), qui délimite une périphérie extérieure du manchon de préparation (1) dans la zone de l'ouverture de dent (3), il reste une nervure extérieure périphérique (10).

2. Le manchon de préparation (1) selon la revendication 1, dans lequel la paroi périphérique (4) présente une section transversale qui s'écarte d'une forme circulaire.

3. Le manchon de préparation selon la revendication 2, dans lequel la section transversale de la paroi périphérique (4) est elliptique, avec un rapport d'axe principal (L/K) dans une plage comprise entre 1,1 et 1,5.

4. Le manchon de préparation selon l'une quelconque des revendications 1 à 3, dans lequel la paroi périphérique (4) présente un contour axial ondulé avec deux zones d'extension axiale maximale (11, 12) et deux zones d'extension axiale minimale (13, 14).

5. Le manchon de préparation selon la revendication 3 ou 4, dans lequel une distance axiale (A) entre les zones d'extension maximale (11, 12), d'une part, et les zones d'extension minimale (13, 14), d'autre part, est comprise entre 0,8 et 1,2 fois une extension d'axe principal plus petite (K/2) de la section transversale elliptique de la paroi périphérique (4).

6. Le manchon de préparation selon l'une quelconque des revendications 1 à 5, dans lequel l'ouverture de dent (3) est réalisée sous la forme d'une ouverture borgne, dans lequel un fond (15) de l'ouverture de dent (3) a une épaisseur (D) qui est supérieure à un quart d'une extension axiale totale (G) du manchon de préparation (1) perpendiculairement à une surface de fond (16) du fond (15).

7. Le manchon de préparation selon l'une quelconque des revendications 1 à 6, dans lequel la zone de transition est un bord de préparation.

8. Ensemble de plusieurs manchons de préparation selon l'une quelconque des revendications 1 à 7 avec différentes largeurs et/ou différentes profondeurs des ouvertures de dent (3) et/ou avec différentes distances axiales (A) entre les zones d'extension maximale (11, 12) et les zones d'extension minimale (13, 14).
